# FASCICULE DE BREVET EUROPEEN

(11) **EP 2 516 822 B1**
(45) Date de publication et mention de la délivrance du brevet: **14.02.2018**
(21) Numéro de dépôt: 10787742.5
(22) Date de dépôt: 02.12.2010
(51) Int. Cl.: F02M 35/10, F02B 29/04, F02M 26/00, F02M 26/21, F02M 26/51

(54) **Module d'admission en gaz d'un moteur de véhicule automobile comportant un échangeur de chaleur.**
Einlassmodul eines Kraftfahrzeugs mit einem Wärmetauscher
Intake module of a moteur vehicule engine with a heat exchangeur.

(30) Priorité: 21.12.2009 FR 0906209
(43) Date de publication de la demande: 31.10.2012
(73) Titulaire: Valeo Systèmes Thermiques, 78320 Le Mesnil-Saint-Denis (FR)
(72) Inventeur: LEROUX, Samuel, F-78300 Poissy (FR)
(74) Mandataire: Cardon, Nicolas
(86) Numéro de dépôt international: PCT/EP2010/068775
(87) Numéro de publication internationale: WO 2011/076539

(56) Documents cités:
- EP-A2- 1 870 591
- DE-A1-102004 013 309
- DE-A1-102004 048 867
- DE-A1-102006 039 497
- DE-A1-102007 040 661
- DE-B3- 10 341 393
- DE-C1- 10 028 131
- FR-A1- 2 931 517
- US-A1- 2006 075 997

## Description

Module d'alimentation en gaz d'un moteur de véhicule automobile comportant un échangeur de chaleur. L'invention concerne un module d'alimentation en gaz d'un moteur de véhicule automobile comportant un échangeur de chaleur et une pièce d'interface entre cet échangeur et la culasse du moteur. Un tel module est connu du document FR2931517.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non.
Dans ce document, la pièce d'interface comporte deux ouvertures : une première ouverture pour un premier gaz provenant d'une vanne située en vis-à-vis de la première ouverture, et une deuxième ouverture pour un deuxième gaz, plus particulièrement de l'air de suralimentation ayant traversé un échangeur de chaleur.
Le mélange des deux gaz s'effectue alors au niveau d'un volume d'entrée d'une culasse d'un véhicule automobile.
On parle de gaz d'échappement recirculés quand des gaz d'échappement sont prélevés en aval de la chambre de combustion du moteur pour être réacheminés (recirculés) vers le flux de gaz d'admission, en amont de la chambre de combustion, où ils sont mélangés à l'air de suralimentation en vue de leur admission dans la chambre de combustion.

Comme indiqué plus haut, une vanne est assujettie à la pièce d'interface, rendant ainsi l'ensemble encombrant alors que l'espace alloué sous le capot pour le module d'alimentation en gaz est de plus en plus réduit.
L'invention vise à améliorer la situation.

A cet effet, elle propose un module d'alimentation selon la revendication indépendante 1. Un module selon l'invention permet ainsi d'intégrer au moins une partie des éléments de la vanne en réduisant ainsi l'encombrement du module d'alimentation en gaz.

Des modes de réalisation particuliers de l'invention sont proposés dans les revendications dépendantes. L'invention sera mieux comprise à l'aide de la description suivante de la forme de réalisation préférée du dispositif et du moteur de l'invention, en référence aux dessins annexés, sur lesquels:
- la figure 1A est une vue de face - coté faisceau d'échange de chaleur - d'une pièce d'interface selon l'invention
- la figure 1B est vue en perspective de la pièce d'interface de la figure 1A
- la figure 1C est une vue de face - coté culasse du moteur - d'une pièce d'interface selon l'invention

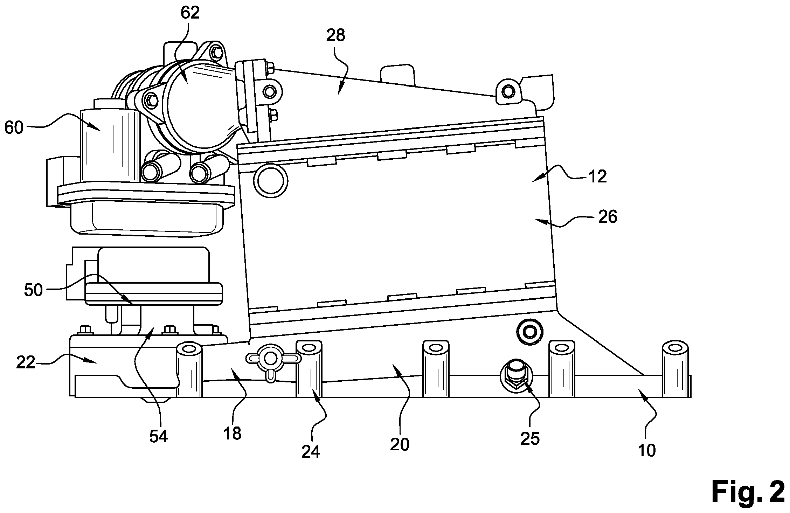

- la figure 2 est une vue de dessus d'un module d'alimentation en gaz d'un moteur selon l'invention, et,
- la figure 3 est une vue de perspective partiellement écorchée - coté culasse du moteur - du module de la figure 2.
L'invention concerne un module d'alimentation en gaz d'un moteur de véhicule automobile comportant un échangeur de chaleur (12). La pièce d'interface 10 comporte, ici, une première ouverture 14 pour le passage d'un premier gaz et une deuxième ouverture 16 apte à venir en regard d'au moins une partie du faisceau de l'échangeur de chaleur 12. Dans le mode de réalisation illustré ici, l'échangeur de chaleur 12 est un refroidisseur d'air de suralimentation.
La première ouverture 14 est traversée, dans ce mode de réalisation, par des gaz d'échappement recirculés.
La deuxième ouverture 16, quant à elle et toujours dans le mode de réalisation illustré ici, permet le passage d'un deuxième gaz (ici, de l'air de suralimentation) ayant préalablement traversé le faisceau d'échange de l'échangeur de chaleur 12.
Dans le mode de réalisation illustré, ici, la deuxième ouverture 16 présente une extrémité proximale 16-1 d'un canal de liaison 18 (décrit plus loin) et une extrémité distale 16-2 du canal de liaison 18. L'extrémité distale 16-2 pourra aussi être appelée extrémité distante 16-2 du canal de liaison 18 de la deuxième ouverture 16. La deuxième ouverture 16 présente, en outre, une longueur et une hauteur.

La pièce d'interface 10 ferme le volume d'entrée de la culasse et définit un premier passage pour des gaz sortant d'une vanne 50 (décrite plus loin) et un deuxième passage pour des gaz sortant de l'échangeur de chaleur 12.

Selon l'invention, la première ouverture 14 présente un profil apte à coopérer avec un élément de la vanne comportant une partie mobile (ou actionneur) 52 d'une vanne 50 en vue de l'obturation au moins partielle de la première ouverture 14 par l'élément présentant la partie mobile 52 de la vanne 50.

Autrement dit, selon l'invention, la première ouverture 14 est apte à recevoir au moins une partie de la vanne 50. La vanne 50 sera dénommée, dans la suite de la description, vanne EGR 50.

Dans le mode de réalisation illustré ici, l'ouverture est apte à recevoir une chemise accueillant, ici, la partie mobile 52 de la vanne EGR 50. Le profil de la première ouverture 14 correspond donc, ici, au profil de la chemise.

Un autre mode de réalisation non illustré propose que le profil de la première ouverture 14 soit un siège de soupape. En d'autres termes, dans un tel cas, le profil de la première ouverture 14 est apte à recevoir l'actionneur 52 de la vanne EGR 50.

Dans ce mode de réalisation, la pièce d'interface 10 comporte en outre un canal de liaison 18, reliant la première ouverture 14 et la deuxième ouverture 16.

Le canal de liaison 18 permet, en d'autres termes, de faire communiquer les première et deuxième ouvertures de manière à obtenir un mélange des deux gaz (ici de l'air de suralimentation et des gaz d'échappement recirculés).

Dans ce mode de réalisation, le mélange entre les deux gaz se fera au niveau de la deuxième ouverture 16, le canal de liaison 18 permettant diriger les gaz provenant de la vanne EGR 50 de la première ouverture 14 vers la deuxième ouverture 16.

Ici, la pièce d'interface 10 comporte en outre un canal d'injection 20.

Le canal s'injection 20 s'étend entre le canal de liaison 18 et une extrémité distante 16-2 du canal de liaison 18 de la deuxième ouverture 16. Autrement dit, dans ce mode de réalisation, le canal d'injection 20 se déploie le long de la deuxième ouverture 16. Ici, le canal d'injection 20 s'étend sur la totalité de la longueur de la deuxième ouverture 16.

Dans le mode de réalisation illustré, le canal d'injection 20 se situe dans le prolongement du canal de liaison 18 et il longe la deuxième ouverture 16.

Autrement dit, ici, les deux canaux 18 et 20 sont confondus de manière à former un canal remplissant les fonctions de liaison entre les deux ouvertures et d'injection du premier gaz dans le deuxième gaz au niveau de la deuxième ouverture 16.

Encore autrement dit, les gaz d'échappement recirculés ne traversent pas l'échangeur de chaleur 12 et sont introduit dans la pièce d'interface 10 par les deux canaux 18 et 20, la pièce d'interface 10 étant disposée à la sortie du faisceau d'échange de chaleur de l'échangeur de chaleur 12.

Dans un mode de réalisation particulier, le canal de liaison 18 et le canal d'injection 20 sont réalisés venue de fonderie de la pièce d'interface 10.

Selon un mode de réalisation particulier, le canal d'injection 20 présente un volume décroissant entre son extrémité située de manière attenante au canal de liaison 18 et son extrémité située de manière attenante à l'extrémité distale 16-2 de la deuxième ouverture 16 du canal de liaison 18.

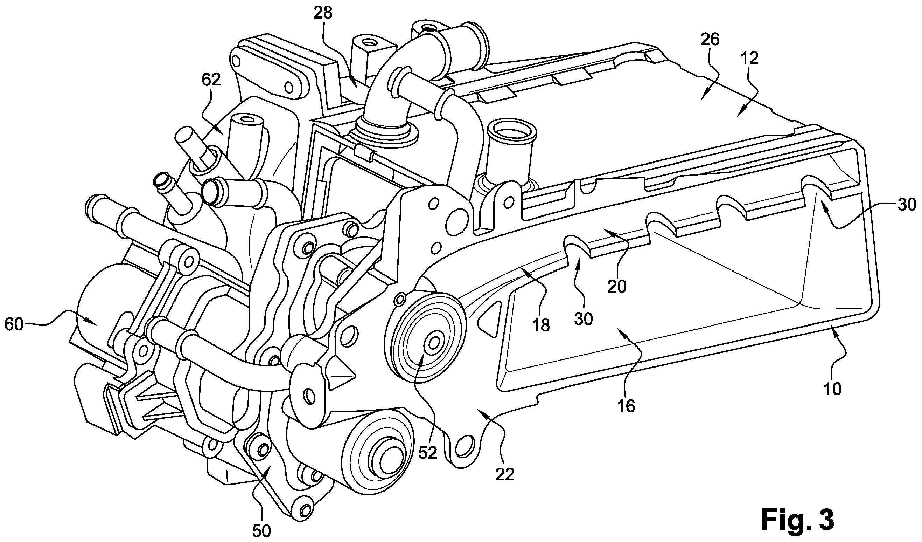

Comme plus particulièrement visible à la figure 3, le canal de liaison 18 présente, lui aussi, un volume décroissant entre la première ouverture 14 et la deuxième ouverture 16, le volume situé à proximité de la première ouverture 14, c'est-à-dire au début du canal de liaison 18, étant plus important que celui situé à proximité de la deuxième ouverture 16, c'est-à-dire à la fin du canal de liaison 18.

Dans cet exemple, le canal d'injection 20 comporte une pluralité d'orifices débouchant le long de la deuxième ouverture 16 et dans le volume défini par la deuxième ouverture 16. La pluralité d'orifices d'injection 30 permet de définir un rail d'injection pour le premier gaz (soit ici les gaz d'échappement recirculés) dans la deuxième ouverture 16.

Ici, l'injection des gaz d'échappement recirculés s'effectue de manière perpendiculaire au flux du deuxième gaz (ici, de l'air de suralimentation) qui traverse le faisceau d'échange de l'échangeur de chaleur 12.

En outre, la première ouverture 14 est bordée par une collerette 22 apte à définir un rebord de fixation pour un corps 54 de la vanne EGR 50.

La pièce d'interface 10 comporte une périphérie présentant des orifices 24 pour sa liaison à la culasse. Ici, les orifices 24 pour la fixation de la pièce d'interface à la culasse sont disposés au niveau de protubérances disposées au moins à proximité du canal d'injection 20. Les orifices 24 sont aptes à recevoir des moyens de fixation, ici des vis, aptes à fixer l'élément d'interface 10 sur la culasse du moteur.

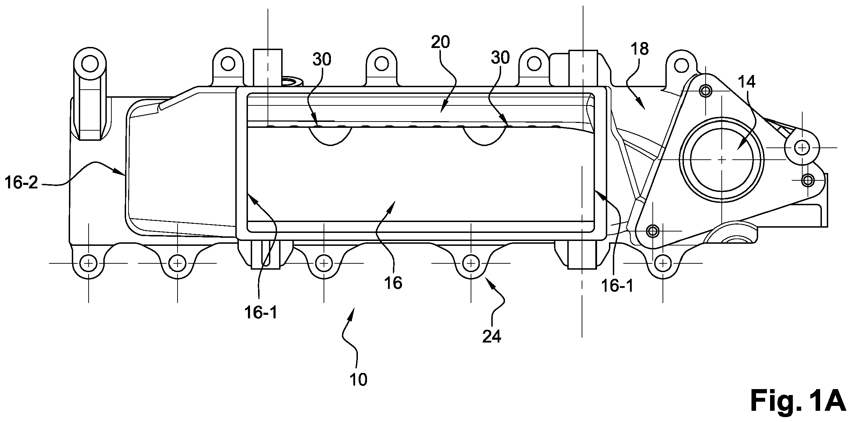

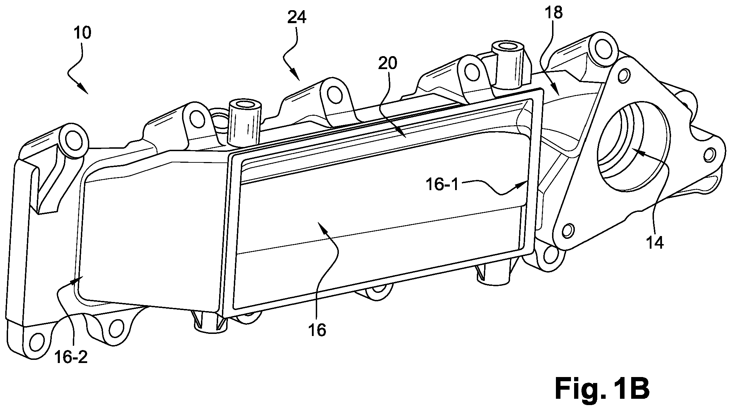

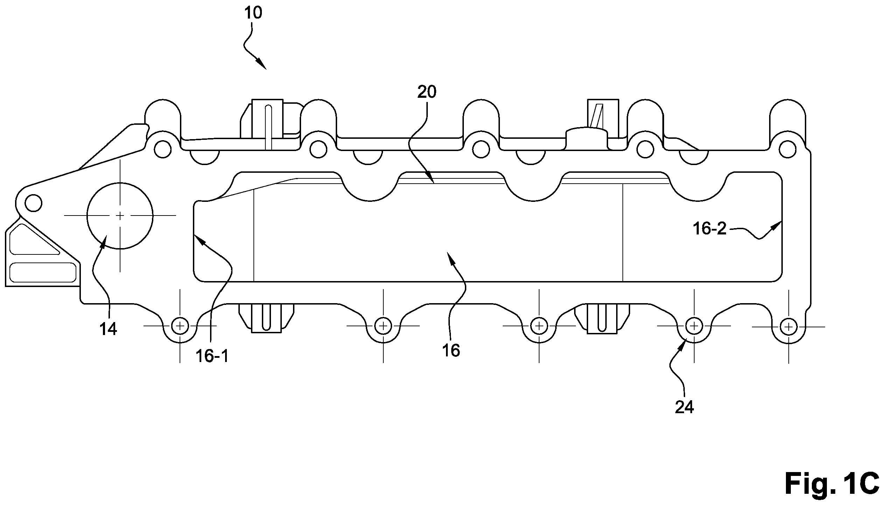

Dans le mode de réalisation illustré aux figures 1A à 1C, les orifices 24 sont situés sur l'ensemble du pourtour de la pièce d'interface 10.

Une variante de réalisation propose que la pièce d'interface 10 comporte en outre un logement pour accueillir un capteur 25 de température et/ou de pression.

L'invention concerne aussi un ensemble d'une pièce d'interface telle que précédemment décrite et d'une vanne EGR 50.

La vanne EGR 50 comporte au moins une partie mobile 52 et un corps 54.

Ici, la partie mobile 52 de la vanne EGR 50 est insérée dans un élément de la vanne réalisé sous la forme d'une chemise. Dans ce mode de réalisation, le corps 54 de la vanne reçoit la chemise comportant la partie mobile 52 de la vanne EGR 50.
La chemise comportant la partie mobile 52 de la vanne EGR 50 est apte à coopérer avec le profil de la première ouverture 14 en vue de l'obturation au moins partielle de la première ouverture 14 par la chemise de la vanne EGR 50.
Autrement dit, ici, la chemise accueillant la partie mobile 52 est apte à fermer au moins en partie le volume de la première ouverture 14 de la pièce d'interface 10.
Dans de mode de réalisation, la partie mobile 52 de la vanne EGR 50 est une soupape.
Le corps 54 de la vanne EGR 50 est muni, à l'extrémité proximale de la pièce d'interface 10, d'une bride fixation apte à coopérer avec la collerette 22 de la pièce d'interface 10 pour la liaison vanne EGR 50 - pièce d'interface 10.
Dans le mode de réalisation illustré ici, la vanne EGR 50 et la pièce d'interface sont munies chacune d'orifices traversant permettant leur liaison par l'intermédiaire de vis.

Le module d'alimentation en gaz comporte en outre l'échangeur de chaleur 12 muni d'un faisceau (non représenté) positionné au moins en partie devant la deuxième ouverture 16 de la pièce d'interface 10. Le faisceau d'échange de chaleur est traversé par de l'air de suralimentation, cet air de suralimentation se mélangeant au niveau de la pièce d'interface 10 avec les gaz d'échappement recirculés injectés par l'intermédiaire des canaux 18 et 20.
Autrement dit, le module d'alimentation en gaz est configuré pour permettre le trajet d'un premier fluide traversant l'échangeur de chaleur 12 (ici, de l'air de suralimentation) et le trajet d'un second fluide (ici, des gaz d'échappement recirculés) traversant la vanne EGR 50 et les deux canaux 18 et 20, les deux fluides se rencontrant et se mélangeant en sortie du faisceau d'échange de chaleur de l'échangeur 12 (ici, au niveau de la pièce d'interface 10 disposé en sortie du faisceau).

Dans ce mode de réalisation, l'échangeur de chaleur 12 comporte un boîtier 26. Le boîtier 26 est assujetti à l'élément d'interface 10, par exemple, par brasage ou soudage.

Dans le mode de réalisation illustré ici, le boîtier 26 est formé par quatre plaques métalliques, par exemple en aluminium, assemblées les unes aux autres, par exemple, par brasage. Les plaques du boîtier 26 forment une enveloppe comportant quatre faces dites pleines et deux faces dites libres. Les faces libres du boîtier 26 sont situées en face l'une de l'autre.

Le faisceau d'échange de chaleur (non représenté) est inséré dans le boîtier 26. Ce faisceau pourra, par exemple être réalisé sous la forme d'un empilement de plaques, non représentées, ménageant un passage pour les gaz d'alimentation et un passage pour un fluide caloporteur.

Ici, une boite collectrice d'entrée (encore appelée boite diffuseur) 28 pour l'air de suralimentation est fixée à une des faces libres du boîtier 26 tandis que la pièce d'interface 10 est fixé à l'autre face libre.

Le module d'alimentation en gaz comporte, ici, une vanne 60 d'alimentation en gaz apte à orienter lesdits gaz au moins au travers de l'échangeur de chaleur 12.

Dans ce mode de réalisation, la vanne 60 d'alimentation en gaz apte à orienter lesdits gaz au moins au travers de l'échangeur de chaleur 12 comporte une partie mobile réalisée sous la forme d'un papillon (ou volet). Cette dernière permet de doser la quantité d'air de suralimentation traversant l'échangeur de chaleur 12 et/ou d'étouffer le moteur.

La vanne 60 d'alimentation en gaz de l'échangeur de chaleur 12 comporte, ici, au moins un corps de vanne et un élément 62 dit élément de sortie 62. Le corps de vanne présente une entrée pour les gaz dans la vanne 60 d'alimentation en gaz de l'échangeur de chaleur 12.

L'élément de sortie 62 est attaché au corps de vanne de manière à former une première sortie de la vanne d'alimentation 60 vers l'échangeur de chaleur 12. En d'autres termes, l'élément de sortie 62 permet une communication entre la 60 d'alimentation en gaz de l'échangeur de chaleur 12 et l'échangeur de chaleur 12 (et plus particulièrement, entre la vanne d'alimentation 60 et la boite collectrice d'entrée de ce dernier).

L'invention ne se limite pas aux modes de réalisation décrits ci avant, seulement à titre d'exemples, mais elle englobe toutes les variantes que pourra envisager l'homme de l'art dans le cadre des revendications ci-après. Les variantes décrites précédemment peuvent être prises séparément ou en combinaison les unes avec les autres.

## Revendications

1. Module d'alimentation en gaz d'un moteur de véhicule automobile, comportant :
- un échangeur de chaleur (12) d'air de suralimentation muni d'un faisceau,
- une pièce d'interface (10) entre une culasse du moteur et l'échangeur de chaleur (12) et,
- une vanne (50) comportant un élément comprenant une partie mobile (52),
la pièce d'interface (10) comportant :
- une première ouverture (14) pour le passage de gaz d'échappement recirculés, ladite première ouverture (14) présentant un profil apte à coopérer avec ledit élément de la vanne (50) en vue de l'obturation au moins partielle de ladite première ouverture (14) par ladite partie mobile (52),
- une deuxième ouverture (16) pour le passage d'air de suralimentation venant en regard d'au moins une partie du faisceau de l'échangeur de chaleur (12), et
- un canal de liaison (18), ladite première ouverture (14) et ladite deuxième ouverture (16) étant reliées par ledit canal de liaison (18),
- un canal d'injection (20) s'étendant entre ledit canal de liaison (18) et une extrémité distante (16-2) dudit canal de liaison (18) de ladite deuxième ouverture (16),
le canal d'injection (20) se déployant le long de la deuxième ouverture (16), le canal d'injection (20) s'étendant sur la totalité de la longueur de la deuxième ouverture (16).

2. Module selon la revendication 1, ledit canal de liaison (18) et ledit canal d'injection (20) étant réalisés venue de fonderie de ladite pièce d'interface (10).

3. Module selon l'une des revendications 1 ou 2, ladite deuxième ouverture (16) présentant une extrémité proximale (16-1) dudit canal de liaison (18) et une extrémité distale (16-2) dudit canal de liaison (18), ledit canal d'injection (20) présentant un volume décroissant entre son extrémité attenante audit canal de liaison (18) et son extrémité attenante à ladite extrémité distale (16-2) dudit canal de liaison (18).

4. Module selon l'une des revendications 1 à 3, ledit canal d'injection (20) comportant une pluralité d'orifices (30) débouchant le long de la deuxième ouverture (16).

5. Module selon l'une des revendications précédentes, ladite première ouverture (14) étant bordée par une collerette (22) apte à définir un rebord de fixation pour un corps (54) de ladite vanne (50).

6. Module selon l'une des revendications précédentes, la pièce d'interface comportant une périphérie présentant des orifices (24) pour la liaison de ladite pièce d'interface (10) à ladite culasse.

7. Module selon l'une des revendications précédentes, la pièce d'interface comportant en outre un logement pour accueillir un capteur (25) de température et/ou de pression.

8. Module selon l'une quelconque des revendications précédentes, ladite partie mobile (52) étant une soupape et ledit profil de ladite première ouverture (14) correspondant au profil dudit élément comportant ladite soupape.

9. Module selon l'une quelconque des revendications précédentes, comportant en outre une vanne d'alimentation en air de suralimentation de manière à orienter l'air de suralimentation au moins au travers dudit échangeur de chaleur (12).

## Patentansprüche

1. Gasversorgungsmodul eines Kraftfahrzeugmotors, welches aufweist:
- einen Ladeluftwärmetauscher (12), der mit einem Rohrbündel ausgestattet ist,
- ein Schnittstellenteil (10) zwischen einem Zylinderkopf des Motors und dem Wärmetauscher (12) und
- ein Ventil (50), das ein Element aufweist, das einen beweglichen Teil (52) umfasst,
wobei das Schnittstellenteil (10) aufweist:
- eine erste Öffnung (14) für den Durchfluss von rückgeführten Abgasen, wobei die erste Öffnung (14) ein Profil aufweist, das geeignet ist, mit dem Element des Ventils (50) zum wenigstens teilweisen Verschließen der ersten Öffnung (14) durch den beweglichen Teil (52) zusammenzuwirken,
- eine zweite Öffnung (16) für den Durchfluss von Ladeluft, die gegenüber wenigstens einem Teil des Rohrbündels des Wärmetauschers (12) angeordnet wird, und
- einen Verbindungskanal (18), wobei die erste Öffnung (14) und die zweite Öffnung (16) durch den Verbindungskanal (18) verbunden sind,
- einen Einspritzkanal (20), der sich zwischen dem Verbindungskanal (18) und einem von dem Verbindungskanal (18) entfernten Ende (16-2) der zweiten Öffnung (16) erstreckt, wobei der Einspritzkanal (20) entlang der zweiten Öffnung (16) verläuft, wobei sich der Einspritzkanal (20) über die gesamte Länge der zweiten Öffnung (16) erstreckt.

2. Modul nach Anspruch 1, wobei der Verbindungskanal (18) und der Einspritzkanal (20) in das Schnittstellenteil (10) eingegossen sind.

3. Modul nach einem der Ansprüche 1 oder 2, wobei die zweite Öffnung (16) ein zu dem Verbindungskanal (18) proximales Ende (16-1) und ein zu dem Verbindungskanal (18) distales Ende (16-2) aufweist, wobei der Einspritzkanal (20) ein Volumen aufweist, das zwischen seinem an den Verbindungskanal (18) angrenzenden Ende und seinem an das zu dem Verbindungskanal (18) distale Ende (16-2) angrenzenden Ende abnimmt.

4. Modul nach einem der Ansprüche 1 bis 3, wobei der Einspritzkanal (20) mehrere Durchlässe (30) aufweist, die entlang der zweiten Öffnung (16) münden.

5. Modul nach einem der vorhergehenden Ansprüche, wobei die erste Öffnung (14) von einem Flansch (22) eingefasst ist, der geeignet ist, einen Befestigungsansatz für einen Körper (54) des Ventils (50) zu definieren.

6. Modul nach einem der vorhergehenden Ansprüche, wobei das Schnittstellenteil einen Umfang umfasst, der Durchlässe (24) zur Verbindung des Schnittstellenteils (10) mit dem Zylinderkopf aufweist.

7. Modul nach einem der vorhergehenden Ansprüche, wobei das Schnittstellenteil außerdem einen Sitz zum Aufnehmen eines Temperatur- und/oder Drucksensors (25) aufweist.

8. Modul nach einem der vorhergehenden Ansprüche, wobei der bewegliche Teil (52) ein Druckventil ist und das Profil der ersten Öffnung(14) dem Profil des Elements entspricht, welches das Druckventil aufweist.

9. Modul nach einem der vorhergehenden Ansprüche, welches außerdem ein Ladeluft-Versorgungsventil aufweist, um die Ladeluft wenigstens durch den Wärmetauscher (12) hindurch zu leiten.

## Claims

1. Gas supply module for a motor vehicle engine, comprising:
- a charge-air heat exchanger (12) provided with a bundle,
- an interface part (10) between a cylinder head of the engine and the heat exchanger (12), and
- a valve (50) comprising an element comprising a movable part (52),
the interface part (10) comprising:
- a first opening (14) for the passage of recirculated exhaust gases, said first opening (14) having a profile able to cooperate with said element of the valve (50) in order to at least partially close off said first opening (14) by means of said movable part (52),
- a second opening (16) for the passage of charge air that faces at least a part of the bundle of the heat exchanger (12), and
- a connection channel (18), said first opening (14) and said second opening (16) being connected by said connection channel (18),
- an injection channel (20) extending between said connection channel (18) and a remote end (16-2) of said connection channel (18) for said second opening (16),
the injection channel (20) extending along the second opening (16), the injection channel (20) extending over the entirety of the length of the second opening (16).

2. Module according to Claim 1, said connection channel (18) and said injection channel (20) being integrally cast with said interface part (10).

3. Module according to either of Claims 1 and 2, said second opening (16) having a proximal end (16-1) of said connection channel (18) and a distal end (16-2) of said connection channel (18), said injection channel (20) having a volume which decreases between its end adjoining said connection channel (18) and its end adjoining said distal end (16-2) of said connection channel (18).

4. Module according to one of Claims 1 to 3, said injection channel (20) comprising a plurality of orifices (30) opening out along the second opening (16).

5. Module according to one of the preceding claims, said first opening (14) being bordered by a flange (22) able to define a fixing rim for a body (54) of said valve (50).

6. Module according to one of the preceding claims, the interface part comprising a periphery having orifices (24) for the connection of said interface part (10) to said cylinder head.

7. Module according to one of the preceding claims, the interface part additionally comprising a housing for accommodating a temperature and/or pressure sensor (25).

8. Module according to any one of the preceding claims, said movable part (52) being a shutter and said profile of said first opening (14) corresponding to the profile of said element comprising said shutter.

9. Module according to any one of the preceding claims, additionally comprising a charge-air supply valve so as to orient the charge air at least through said heat exchanger (12).
